# EUROPEAN PATENT APPLICATION

(11) **EP 4 648 497 A1**
(43) Date of publication of application: **12.11.2025**
(21) Application number: 23914328.2
(22) Date of filing: 27.09.2023
(51) Int. Cl.: H04W 56/00

(54) **SYNCHRONIZATION METHOD USED FOR DISTRIBUTED ANTENNA SYSTEM**

(30) Priority: 03.01.2023 CN 202310003888
(71) Applicant: PROSE TECHNOLOGIES (SUZHOU) CO., LTD., Suzhou, Jiangsu 215345 (CN)
(72) Inventor: CHEN, Lin, Suzhou, Jiangsu 215345 (CN); FAN, Cunxiao, Suzhou, Jiangsu 215345 (CN); XU, Wei, Suzhou, Jiangsu 215345 (CN); ZHU, Botao, Suzhou, Jiangsu 215345 (CN); XU, Renzhen, Suzhou, Jiangsu 215345 (CN)
(74) Representative: Isarpatent
(86) International application number: PCT/CN2023/122048
(87) International publication number: WO 2024/146190

(57) **Abstract**

The present disclosure relates to a synchronization method for a distributed antenna system. The distributed antenna system includes an access unit and at least one remote unit. The method includes obtaining a configuration parameter of time-division duplexing (TDD), obtaining a space signal according to the configuration parameter to determine first frame header information associated with a first TDD network, transmitting the first frame header information to at least one remote unit, and determining a synchronization signal by the at least one remote unit according to the first frame header information. Then, the remote device 130 may not need the capability of parsing a plurality of TDD time domain parameters. In the synchronization method for the distributed antenna system according to the present disclosure, the remote device may not need the capability of parsing a plurality of TDD time domain parameters and the near-end device can automatically determine the optimal mode that should be currently applied according to the current environment. The synchronization method without any additional device can implement the multi-network fusion to significantly reduce the network deployment cost.

## Description

### CROSS-REFERENCE TO RELATED APPLICATIONS

This application is a continuation of International Application No. PCT/CN2023/122048, filed on September 27, 2023, which claims priority to Chinese Patent Application No. 202310003888.3, filed on January 3, 2023, the entire contents of which are incorporated herein by reference.

### TECHNICAL FIELD

The present disclosure generally relates to the communication technology field and, more particularly, to a synchronization method for a distributed antenna system.

### BACKGROUND

Currently, since a time division duplex (TDD) network standard has a synchronized triggering requirement with a base station in a time domain, a commercial in-network active multi-network fusion system has a single network standard. Thus, the system cannot satisfy the requirement for the fusion coverage of a plurality of TDD networks. For example, most of the current in-network multi-network fusion systems (including an active distributed system and a passive distributed system) only support a single 4G TDD network or a single 5G TDD network. That is, the system cannot satisfy the co-network coverage requirement of a single or a plurality of 4G TDDs and a single or a plurality of 5G TDDs.

Furthermore, even in the existing solution that only supports a single TDD network, a device configured to parse a special signal is provided for each remote device. Thus, the cost of the remote device is increased, and the complexity of the network deployment is added.

### SUMMARY

It can be seen that the near-end devices in the existing technology cannot meet the requirements of multi-network convergence. Therefore, it is urgent to propose a new network architecture so that as many parsing space signal processing as possible can be carried out on the near-end devices, thereby meeting the implementation method of multi-mode TDD network synchronization.

To solve the above technical problems, the inventor of the present disclosure has proposed a synchronization method for a distributed antenna system. The distributed antenna system includes an access unit and a remote unit. The method includes:
obtaining a configuration parameter of time-division duplexing (TDD);
obtaining a space signal according to the configuration parameter to determine first frame header information associated with a first TDD network,
transmitting the first frame header information to at least one remote unit, and
determining a synchronization signal by the at least one remote unit according to the first frame header information.

In this manner, the remote device may not need to have the capability to parse a plurality of TDD time-domain parameters and the near-end device can obtain the space signal according to the configuration parameter to determine the first frame header information associated with the first TDD network to automatically determine the optimal mode to use under the current environment, e.g., a single TDD or a multi-TDD mode. Additionally, with the synchronization method for the distributed antenna system of the present disclosure, no additional device is needed to realize the multi-network fusion to significantly reduce the network deployment cost.

In one embodiment of the present disclosure, transmitting the first frame header information to the at least one remote unit includes sending the first frame header information to the at least one remote unit in a radio frequency (RF) broadcast method.

In one embodiment of the present disclosure, obtaining the space signal according to the configuration parameter includes: obtaining synchronization statuses of a plurality of TDD networks within a frequency band range associated with the configuration parameter; obtaining a plurality of pieces of frame header information associated with the plurality of TDD networks according to the synchronization status, the plurality of TDD networks including the first TDD network; and obtaining frame header differences between frame header information of other TDD networks of the plurality of TDD networks except the first TDD network, and the first frame header information.

In one embodiment of the present disclosure, the synchronization method further includes: transmitting the frame header differences to the at least one remote unit; and determining a synchronization signal by the at least one remote unit according to the first frame header information and the frame header differences. In this manner, the data amount sent by the near-end device to the remote device can be lowered to improve the utilization efficiency of the link resources and meanwhile send the frame header information of the preferred TDD network and the frame header difference between the other TDD networks and the first TDD network to the remote device. Thus, when the remote device needs to select the non-first TDD network, the frame header information of other TDD networks can be calculated according to the information to choose the non-first TDD network.

In one embodiment of the present disclosure, transmitting the frame header differences to the at least one remote unit includes: sending the frame header differences to the at least one remote unit in a monitoring broadcast method.

In one embodiment of the present disclosure, the synchronization method further includes: determining a signal power of each TDD network; comparing the signal power with a threshold power; and in response to the signal power being greater than the threshold power, determining the TDD network associated with the signal power to be valid.

In this manner, the distributed antenna system of the present disclosure can determine whether the TDD network associated with the signal power is valid according to the comparison result between the signal power of the TDD network and the threshold power, thereby filtering out the TDD networks with poor signal quality and improving the user experience of the entire distributed antenna system.

In one embodiment of the present disclosure, the threshold power is set to -10 dBm.

In one embodiment of the present disclosure, the synchronization method further includes: outputting a flip signal in response to the signal power being greater than the threshold power.

In one embodiment of the present disclosure, the synchronization method further includes: determining a flip point based on the flip signal; and recovering a timeslot signal of the first TDD network according to the flip point and the first frame header information.

In one embodiment of the present disclosure, obtaining the space signal according to the configuration parameter to determine the first frame header information associated with the first TDD network includes: determining the signal power of the TDD networks; and determining a TDD network with a maximum signal power as the first TDD network. In this manner, the distributed antenna system of the present disclosure can determine the signal power of the TDD networks based on the synchronization status and determine the TDD network with the maximum signal power as the first TDD network. Thus, the remote unit can select the optimal TDD network to further improve the network experience of the end users.

In one embodiment of the present disclosure, the synchronization method further includes: setting a network expansion unit (NEU) between an access unit and the remote unit. In this way to further increase the number of remote devices to increase the number of user devices connected to the remote devices. That is, the network coverage range of the distributed antenna system of the present disclosure can be improved.

In one embodiment of the present disclosure, the synchronization method further includes: coupling the NEU between the access unit and the remote unit via an analog optical fiber. In this manner, the communication signal can be transmitted in an analog manner, not a digital manner, to improve the transmission bandwidth.

Furthermore, the current in-network multi-network fusion system can often support only a single-frequency 5G TDD network, since the bandwidth of a 5G network is relatively wide. Thus, the current in-network multi-network fusion system cannot satisfy the requirement of shared network coverage by a plurality of 5G TDD network spectrums. To address this technical issue, in embodiments of the present disclosure, the access unit can be coupled with the at least one remote unit via an analog optical fiber. Thus, with the wide bandwidth feature of the analog optical fiber, the requirement of shared network coverage by the plurality of 5G TDD network spectrums can be satisfied.

In summary, in the synchronization method for the distributed antenna system of the present disclosure, the remote device may not need to have the capability to parse a plurality of TDD time-domain parameters. Moreover, the near-end device can obtain the space signal according to the configuration parameter to determine the first frame header information associated with the first TDD network to automatically determine the optimal mode to use under the current environment, e.g., a single TDD or a multi-TDD mode. Additionally, with the synchronization method for the distributed antenna system of the present disclosure, no additional device is needed to realize the multi-network fusion to significantly reduce the network deployment cost.

### BRIEF DESCRIPTION OF THE DRAWINGS

The embodiments are shown and explained with reference to the accompanying drawings. These drawings are used to explain the basic principles, and only the aspects necessary for understanding the basic principles are shown. These drawings may not to scale. In the drawings, the same reference numerals represent similar features.
FIG. 1 is a schematic block diagram of a distributed antenna system according to some embodiments of the present disclosure.
FIG. 2 is a schematic block diagram of another distributed antenna system according to some embodiments of the present disclosure.
FIG. 3 is a schematic flowchart of a synchronization method 300 for a distributed antenna system according to some embodiments of the present disclosure.

Other features, characteristics, advantages and benefits of the present disclosure will become more apparent from the following detailed description taken in conjunction with the accompanying drawings.

### DETAILED DESCRIPTION OF THE EMBODIMENTS

Embodiments of the present disclosure are described in detail with reference to the accompanying drawings that form a part of the present disclosure. The accompanying drawings illustrate embodiments of the present disclosure with examples. Exemplary embodiments are not intended to exhaust all embodiments of the present disclosure. Without departing from the scope of the present disclosure, other embodiments can be used, and structural or logical modifications can be made. Therefore, the description below is not limiting, and the scope of the present disclosure is defined by the appended claims.

The term "include" and its variations as used herein indicate open-ended inclusion, i.e., "including but not limited to." Unless specifically stated otherwise, the term "or" means "and/or." The term "based on" means "at least partially based on." The phrases "an exemplary embodiment" and "an embodiment" mean "at least one exemplary embodiment." The phrase "another embodiment" means "at least one additional embodiment." The terms "first," "second," and so on may refer to different or identical objects. Other explicit and implicit definitions may also be included below.

A near-end device of the existing technology does not have the capability of parsing a plurality of time division duplex (TDD) time domain parameters. Thus, the capability of parsing the plurality of TDD time domain parameters may need to be provided to each remote device, which inevitably adds extra costs to network deployment.

To address the above technical issue, the inventors of the present disclosure provide a synchronization method for a distributed antenna system.

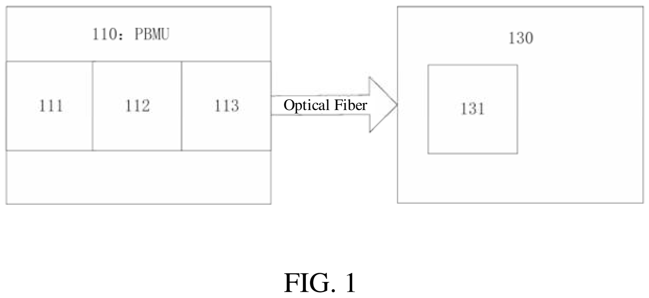

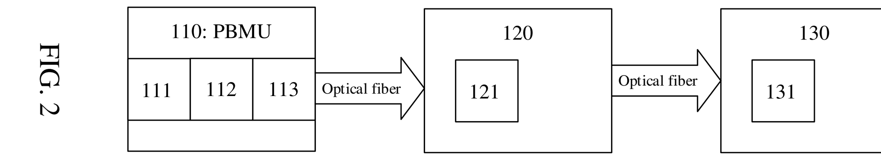

The synchronization method for the distributed antenna system of the present disclosure is described below with reference to the accompanying drawings. Before introducing the synchronization method for the distributed antenna system, a system block diagram of the distributed antenna system to which the method applies can be presented. FIG. 1 is a schematic block diagram of a distributed antenna system according to some embodiments of the present disclosure. FIG. 2 is a schematic block diagram of another distributed antenna system according to some embodiments of the present disclosure.

As shown in FIG. 1, a synchronization method for the distributed antenna system of the present disclosure operates in the distributed antenna system, including a near-end device 110 and a remote device 130. In some embodiments, communication between the near-end device 110 and the remote device 130 can be achieved through an analog optical fiber to meet high bandwidth demands. However, those skilled in the art should understand that this feature is a preferred feature and not a mandatory feature. In embodiments shown in FIG. 1, the near-end device 110 is typically a power balance master unit (PBMU), which includes a host 111, a CBM module, and an optical module. Since the communication between the near-end device 110 and the remote device 130 is conducted through an analog optical fiber, the remote device 130 typically also includes an optical module 131.

To further expand the number of remote devices 130 that a near-end device 110 can be connected to or cover, one or a plurality of network extension units (NEUs) can be connected between the near-end device 110 and the remote device 130. FIG. 2 is a schematic block diagram of another distributed antenna system according to some embodiments of the present disclosure. As shown in FIG. 2, communication between the near-end device 110 and the NEU 120, and communication between the NEU 120 and the remote device 130 are realized via an analog optical fiber. In embodiments of FIG. 2, the near-end device 110 is typically a PBMU, including a host 111, a CBM module, and an optical module. The communication between the near-end device 110 and the NEU 120, and the communication between the network extension unit 120 and the remote device 130 can be realized via an analog optical fiber to satisfy the high bandwidth demands. However, those skilled in the art should understand that this feature is a preferred feature, not a mandatory feature. Therefore, the NEU 120 typically also includes an optical module 121, and the remote device 130 typically also includes an optical module 131.

In the examples shown in FIGs. 1 and 2, the near-end device 110 is responsible for collecting device information, issuing device configuration parameters, etc. The relay device, such as the NEU 120, can also belong to the near-end device, which is configured to expand the remote device. The remote device 130 is usually configured for signal conversion, amplification, transmission, and reception.

As shown in FIG. 1 and FIG. 2, during a specific operation process, the near-end device 110 first sends a TDD parameter to a CBM radio frequency (RF) board 112. The RF board 112 obtains various TDD signals in space and, parses the frame header information of TDD1 based on configured parameters, and parses the frame header difference information of TDD1 and TDD2 when other TDD networks are present. Then, the near-end device 110 collects the RF board TDD information and sends the TDD information to the remote device 130. Then, the remote device 130 can perform demodulation to determine a synchronization signal.

The system automatically detects and completes the entire network switching process without extra operations.

The PBMU 110 can be configured to automatically determine whether a 4G network or 5G network exists in the current environment according to the signal power of input channels CH-F and CH-G. If both CH-F and CH-G have signals, the system can select a frame header of a TDD1 signal according to the parameter configured in the system and the frame header difference between the TDD2 and TDD1 signals. The demodulation module on the near-end device 110 can detect the optimal frequency bands of 4G and 5G in real-time. The host 111 can transmit different network frame headers and frame header difference information according to different network standard configurations of the remote device 130.

For example, the CBM RF board 112 can receive the TDD configuration parameters issued by the host 111. The TDD configuration parameters can include a TDD1 time domain parameter and a TDD2 time domain parameter. The TDD can include all frequency bands of 4G TDD and 5G TDD. Then, the CBM RF board 112 can collect the synchronization status of TDD1 and TDD2 for the host 111 to collect. Then, when the CBM RF board 112 detects that the power of the channel CH-F is greater than a certain threshold, such as -10 dBm, the current TDD1 can be considered effective. Similarly, when the CBM RF board 112 detects that the power of the channel CH-G is greater than a certain threshold, such as -10 dBm, the current TDD2 can be considered effective. If only 4G is effective, the CBM RF board can output a 4G flip signal of 1.5 GHz. The remote device 130 can parse the flip point according to the signal. If only 5G is valid, the CBM RF board 112 can output a 5G flip signal of 1.5 GHz. The remote device 130 can parse the flip point according to the signal. If both 4G and 5G are valid, the CBM RF board 112 can calculate the dual-frequency frame header difference for the host 111 to collect. The remote device 130 can parse the flip point according to the dual-frequency frame header difference and the 4G frame header or 5G frame header. Then, the software can calculate the computation signal strength to select the 4G frame header or the 5G frame header. Then, the host 111 can automatically control the broadcast frequency according to the signal strength to effectively lower the communication link load.

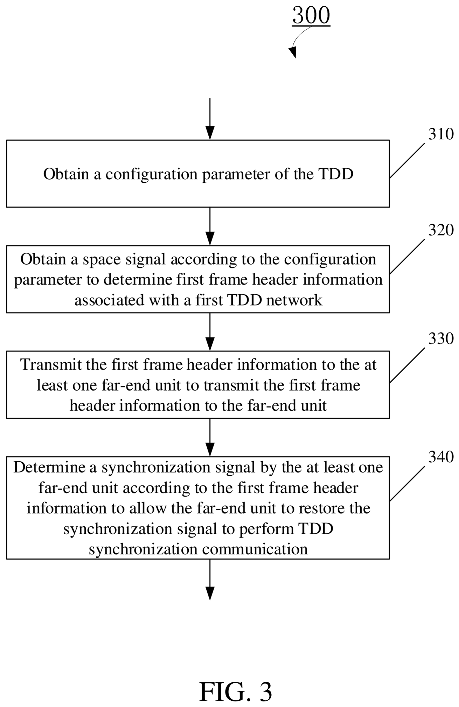

Next, FIG. 3 is a schematic flowchart of a synchronization method 300 for a distributed antenna system according to some embodiments of the present disclosure. As shown in FIG. 1 and FIG. 2, the distributed antenna system includes an access unit (e.g., the near-end device 110) and a remote unit (e.g., the remote device 130). In some embodiments, the access unit 110 can be coupled to at least one remote unit 130 via the analog optical fiber to satisfy the high bandwidth demands. However, those skilled in the art can understand that this feature is a preferred feature, not a mandatory feature. The synchronization method 300 includes obtaining a configuration parameter of the TDD (310). For example, whether the current system includes a single TDD or a plurality of TDDs, the configuration parameter can include frequency band information. The method 300 further includes obtaining a space signal according to the configuration parameter to determine first frame header information associated with a first TDD network (320). If only one TDD network is provided, the TDD network can be the first TDD network, and the frame header information of the TDD network can be the first frame header information. The method 300 further includes transmitting the first frame header information to the at least one remote unit to transmit the first frame header information to the remote unit (330), and determining a synchronization signal by the at least one remote unit according to the first frame header information to allow the remote unit to restore the synchronization signal to perform TDD synchronization communication (340). Then, the remote device 130 may not need the capability of parsing a plurality of TDD time domain parameters. The near-end device 110 can obtain the space signal to determine the first frame header information associated with the first TDD network according to the configuration parameter. Then, the optimal mode that should be currently applied can be automatically determined according to the current environment, e.g., whether a single TDD mode or a multi-TDD mode. Thus, in the synchronization method 300 for the distributed antenna system of the present disclosure, no additional device is needed to implement the multi-network fusion to significantly reduce the network deployment cost.

In embodiments of the present disclosure, obtaining the space signal according to the configuration parameter can include obtaining a synchronization status of a plurality of TDD networks in a frequency band range associated with the configuration parameter, obtaining information of a plurality of frame headers associated with the plurality of TDD networks including the first TDD network according to the synchronization status, and obtaining frame header differences between frame header information of other TDD networks except the first TDD network of the plurality of TDD networks and the first frame header information. When the plurality of TDD networks are provided, e.g., a 4G TDD network and a 5G TDD network exist, the near-end device, such as the PBMU, can select a TDD network with a good signal from the plurality of TDD networks as the first TDD network. Then, a difference between the frame header information of other TDD networks and the frame header information of the first TDD network can be calculated. The frame header difference can be sent to the remote unit together with the first frame header information. Then, the remote unit can freely select the TDD network. The first frame header information can be sent to the at least one remote unit in an RF broadcast method. In summary, with such a method, the data amount sent by the near-end device to the remote device can be lowered to improve the utilization efficiency of the link resources and meanwhile send the frame header information of the preferred TDD network and the frame header difference between the other TDD networks and the first TDD network to the remote device. Thus, when the remote device needs to select the non-first TDD network, the frame header information of the non-preferred TDD network can be calculated according to the information to choose the non-first TDD network.

To allow the remote unit to use the other TDD networks of the non-first TDD network, the synchronization method can further include transmitting the frame header difference to the at least one remote unit and determining the synchronization signal by the at least one remote unit according to the first frame header information and the frame header difference. Then, the remote device can know the frame header information of all the TDD networks according to the received first frame header information and the frame header differences. Further, the synchronization signals of the TDD networks can be determined, which facilitates the selection of a suitable TDD network to perform the TDD network communication. In such a method, the data amount sent by the near-end device to the remote device can be reduced to improve the utilization efficiency of the link resources and send the preferred first frame header information and differences between the other TDD networks and the first frame header to the remote device simultaneously. Then, the remote device can calculate the frame header information of the other TDD networks according to the above information when the remote device needs to select another TDD network and can then select the non-first TDD network. Thus, the frame header difference can be sent to the at least one remote device in a monitoring broadcast method.

Optionally, in embodiments of the present disclosure, the synchronization method can further include determining the signal power of the TDD networks, comparing the signal power with the threshold power, and in response to the signal power being greater than the threshold power, determining the TDD network associated with the signal power to be effective. Then, the distributed antenna system of the present disclosure can determine whether the TDD network associated with the signal power is valid according to the comparison result between the signal power of the TDD network and the threshold power, thereby filtering out the TDD networks with poor signal quality and improving the user experience of the entire distributed antenna system.

In embodiments of the present disclosure, the threshold power can be set to -10 dBm. For example, for the TDD signals of the frequency bands, the near-end device can detect the signal power of the TDD signals of the frequency bands, then compares the detected signal power with the threshold power, such as -10 dBm. If the signal power is lower than the threshold power, the signal quality of the TDD network of that frequency band can be poor and unusable. If the signal power is higher than the threshold power, the signal quality of the TDD network of that frequency band can be good to use. In embodiments of the present disclosure, the synchronization method can further include outputting a flip signal when the signal power is greater than the threshold power. In embodiments of the present disclosure, the synchronization method can further include determining a flip point according to the flip signal and restoring a time slot signal of the first TDD network according to the flip point and the first frame header information.

When a plurality of TDD networks are provided, a TDD network may need to be selected as the first TDD network. That is, obtaining the space signal according to the configuration parameter to determine the first frame header information associated with the first TDD network can include determining the signal power of the TDD networks and determining the TDD network with the maximum signal power as the first TDD network. Then, the distributed antenna system of the present disclosure can determine the signal power of the TDD networks based on the synchronization status and determine the TDD network with the maximum signal power as the first TDD network. Thus, the remote unit can select the optimal TDD network to further improve the network experience of the end users.

Preferably, in embodiments of the present disclosure, the synchronization method can further include setting a NEU between the access unit and the remote unit. In this way to further increase the number of remote devices to increase the number of user devices connected to the remote devices. That is, the network coverage range of the distributed antenna system of the present disclosure can be improved. In some other embodiments, the synchronization method can further include coupling the NEU between the access unit and the remote unit via an analog optical fiber. Thus, the communication signal can be transmitted in an analog manner, not a digital manner, to improve the transmission bandwidth.

Furthermore, the current in-network multi-network fusion system can often support only a single-frequency 5G TDD network, since the bandwidth of a 5G network is relatively wide. Thus, the current in-network multi-network fusion system cannot satisfy the requirement of shared network coverage by a plurality of 5G TDD network spectrums. To address this technical issue, in embodiments of the present disclosure, the access unit can be coupled with the at least one remote unit via an analog optical fiber. Thus, with the wide bandwidth feature of the analog optical fiber, the requirement of shared network coverage by the plurality of 5G TDD network spectrums can be satisfied.

In summary, in the synchronization method for the distributed antenna system of the present disclosure, the remote device may not need to have the capability to parse a plurality of TDD time-domain parameters. Moreover, the near-end device can obtain the space signal according to the configuration parameter to determine the first frame header information associated with the first TDD network to automatically determine the optimal mode to use under the current environment, e.g., a single TDD or a multi-TDD mode. Additionally, with the synchronization method for the distributed antenna system of the present disclosure, no additional device is needed to realize the multi-network fusion to significantly reduce the network deployment cost.

Although different exemplary embodiments of the present disclosure have been described, those skilled in the art can know that different modifications and changes can be made to realize one or more advantages of the present disclosure without departing from the spirit and scope of the present disclosure. For those skilled in the art, other members executing the same functions can be appropriately replaced. The features described with reference to a certain accompanying drawing can be combined with features of the other accompanying drawings even if such combinations are not explicitly mentioned. In addition, the methods of the present disclosure can be implemented either in software using appropriate processor instructions or in a hybrid implementation combining hardware logic and software logic to achieve the same result. The modifications according to the solution of the present disclosure are intended to be covered by the appended claims.

## Claims

1. A synchronization method for a distributed antenna system, the distributed antenna system comprising an access unit and at least one remote unit, the synchronization method comprising:
obtaining a configuration parameter of time-division duplexing (TDD);
obtaining a space signal according to the configuration parameter to determine first frame header information associated with a first TDD network;
transmitting the first frame header information to the at least one remote unit; and
determining a synchronization signal by the at least one remote unit according to the first frame header information.

2. The synchronization method according to claim 1, wherein transmitting the first frame header information to the at least one remote unit comprises:
sending the first frame header information to the at least one remote unit in a radio frequency (RF) broadcast method.

3. The synchronization method according to claim 1, wherein obtaining the space signal according to the configuration parameter comprises:
obtaining synchronization statuses of a plurality of TDD networks within a frequency band range associated with the configuration parameter;
obtaining a plurality of pieces of frame header information associated with the plurality of TDD networks according to the synchronization status, the plurality of TDD networks including the first TDD network; and
obtaining frame header differences between frame header information of other TDD networks of the plurality of TDD networks except the first TDD network, and the first frame header information.

4. The synchronization method according to claim 3, wherein the synchronization method further comprises:
transmitting the frame header differences to the at least one remote unit; and
determining a synchronization signal by the at least one remote unit according to the first frame header information and the frame header differences.

5. The synchronization method according to claim 3, wherein transmitting the frame header differences to the at least one remote unit comprises:
sending the frame header differences to the at least one remote unit in a monitoring broadcast method.

6. The synchronization method according to claim 3, wherein the synchronization method further comprises:
determining a signal power of each TDD network;
comparing the signal power with a threshold power; and
in response to the signal power being greater than the threshold power, determining the TDD network associated with the signal power to be valid.

7. The synchronization method according to claim 6, wherein the threshold power is set to -10 dBm.

8. The synchronization method according to claim 6, wherein the synchronization method further comprises:
outputting a flip signal in response to the signal power being greater than the threshold power.

9. The synchronization method according to claim 8, wherein the synchronization method further comprises:
determining a flip point based on the flip signal; and
recovering a timeslot signal of the first TDD network according to the flip point and the first frame header information.

10. The synchronization method according to claim 1, wherein obtaining the space signal according to the configuration parameter to determine the first frame header information associated with the first TDD network comprises:
determining the signal power of the TDD networks; and
determining a TDD network with a maximum signal power as the first TDD network.

11. The synchronization method according to claim 1, wherein the synchronization method further comprises:
setting a network expansion unit (NEU) between an access unit and the remote unit.

12. The synchronization method according to claim 11, wherein the synchronization method further comprises:
coupling the NEU between the access unit and the remote unit via an analog optical fiber.

13. The synchronization method according to claim 1, wherein the access unit and the at least one remote unit are coupled via an analog optical fiber.
